# EUROPEAN PATENT SPECIFICATION

(11) **EP 4 186 584 B1**
(45) Date of publication and mention of the grant of the patent: **17.09.2025**
(21) Application number: 21210462.4
(22) Date of filing: 25.11.2021
(51) Int. Cl.: B01D 67/00, B01D 69/02, B01D 71/80, C08J 3/28, B01D 71/26, B01D 71/28

(54) **METHOD FOR CROSS-LINKING OF POLYMERIC MEMBRANES**
VERFAHREN ZUR VERNETZUNG VON POLYMEREN MEMBRANEN
PROCÉDÉ DE RÉTICULATION DE MEMBRANES POLYMÈRES

(43) Date of publication of application: 31.05.2023
(73) Proprietor: Helmholtz-Zentrum hereon GmbH, 21502 Geesthacht (DE)
(72) Inventor: Appold, Michael, 22081 Hamburg (DE); Rangou, Sofia, 21033 Hamburg (DE); Filiz, Volkan, 22763 Hamburg (DE)
(74) Representative: Uexküll & Stolberg

(56) References cited:
- EP-A1- 3 772 370
- US-A1- 2015 000 679
- US-A1- 2021 340 343
- ZHANG TAO ET AL: "Isorefractive high internal phase emulsion organogels for light induced reactions", CHEMICAL COMMUNICATIONS, vol. 52, no. 24, 26 February 2016 (2016-02-26), UK, pages 4561 - 4564, XP055882595, ISSN: 1359-7345, DOI: 10.1039/C6CC00391E
- HOBIGER VIOLA ET AL: "Thiol-Ene Cross-linking of Poly(ethylene glycol) within High Internal Phase Emulsions: Degradable Hydrophilic PolyHIPEs for Controlled Drug Release", vol. 54, no. 22, 8 November 2021 (2021-11-08), US, pages 10370 - 10380, XP055882569, ISSN: 0024-9297, Retrieved from the Internet <URL:https://pubs.acs.org/doi/pdf/10.1021/acs.macromol.1c01240> [retrieved on 20220124], DOI: 10.1021/acs.macromol.1c01240

## Description

### FIELD OF THE INVENTION

The present invention relates to a method for cross-linking of polymeric membranes. The method is also suitable for cross-linking of other polymeric materials such as thin films and porous films. The present invention also relates to polymeric membranes produced by the method of the present invention which are distinguished from prior art membranes in having an exceptionally high temperature and chemical stability.

### BACKGROUND OF THE INVENTION

Membranes have gained an important place in chemical technology and are used in a broad range of applications. Membranes are nowadays widely used for filtration, separation or purification processes including, but not limited to reverse osmosis, ultrafiltration, microfiltration, gas separation, pervaporation and electrodialysis. In separation applications, the goal is to allow one component of a mixture to permeate the membrane freely, while hindering permeation of other components. Due to the above-mentioned interdisciplinary fields of applications, there is a number of different requirements on the membrane performance.

Membranes may be molecularly homogeneous, that is, completely uniform in composition and structure, or they may be chemically or physically heterogeneous, for example, containing holes or pores of finite dimensions or consisting of some form of layered structure. Significant progress has been made in the development of polymer and block copolymer membranes having higher selectivity, sharper molecular weight cut-off and higher permeability in comparison to currently available commercial membrane materials.

Over the last decade, membranes prepared using a block copolymer self-assembly and non-solvent induced phase separation (SNIPS) method have become increasingly desirable candidates for water purification and protein separation applications due to their excellent permselectivity. On the basis of the SNIPS method, smart polymer-based materials offer the opportunity for forming selective membrane architectures and functionalities for applications in different sectors.

One such method for producing a polymeric membrane applying the SNIPS technology is disclosed in WO 2021/023500 A1 which is incorporated herein for reference in its entirety. The method for producing a polymeric membrane disclosed in WO 2021/023500 A1 includes the steps of dissolving at least one amphiphilic block copolymer in a solvent or mixture of solvents to form a casting solution of the block copolymer, applying the solution as a layer on a support with a doctor blade at a predefined thickness, and contacting the solution layer with non-solvent to induce phase separation and thereby producing an integral asymmetric polymeric membrane, wherein the amphiphilic block copolymer is a diblock copolymer containing benzocyclobutene units, and wherein the integral asymmetric polymeric membrane is cross-linked by application of heat or radiation, thereby producing a membrane having a homogeneous porosity throughout the entire polymeric phase.

The membranes produced via SNIPS technology consist of a very thin selective layer exhibiting hexagonally ordered pores of uniform size and a random inhomogeneous or, in case of foams, a three-dimensional porosity in the substructure. Due to these characteristics, block copolymer membranes combine good selectivity and permeability compared to commercially available membranes made of polyimides or polyacrylonitrile.

Cross-linking of the membranes is essential for increasing the stability thereof, and cross-linking is generally achieved thermally, by chemical reaction, or by irradiation, such as UV irradiation. Thermal cross-linking, however, requires temperatures of more than 100°C, leading to a loss of the membranes' isoporous structure. Chemical cross-linking requires the use of organic solvents, wherein the membranes are at least partially soluble, also leading to a loss of the membranes' isoporous structure. Cross-linking by irradiation causes a cross-linking only at the first few nanometers of the membrane surface but not through the complete cross-section of the membrane, leading to poor thermal and chemical stability.

Thus, there is a need for membranes that combine good selectivity and permeability, and also possess excellent thermal and chemical stability. There is also a need for a method of making such membranes which can be performed in a simple and economic manner, and on a technical scale. EP 3 772 370 A1 discloses a polymeric membrane composed of an amphiphilic block copolymer of poly(4-vinylbenzocyclobutente)-block-poly(4-vinylpyridine) (PVBCB-b-P4VP). US 2021/340343 A1 discloses the production of ion-exchange membranes using UV light.

### SUMMARY OF THE INVENTION

The present invention relates to a method for cross-linking a porous, polymeric membrane as described in claim 1. The method comprises the steps of providing a cross-linkable polymeric membrane, immersing the cross-linkable membrane into a non-solvent liquid, removing the membrane from the non-solvent liquid, and subjecting the cross-linkable polymeric membrane to radiation to cause cross-linking of the polymeric membrane, wherein the non-solvent liquid is isorefractive with the cross-linkable polymeric material as determined visually when the non-solvent liquid renders the immersed cross-linkable polymeric film invisible.

In yet another embodiment the present invention relates to a method for producing the cross-linkable polymeric membrane comprising the steps of dissolving at least one amphiphilic block copolymer containing vinylbenzocyclobutene units in a solvent or mixture of solvents to form a casting solution of the block copolymer, applying the solution as a layer on a support with a doctor blade at a predefined thickness, and contacting the solution layer with non-solvent to induce phase separation and thereby producing an integral asymmetric polymeric membrane.

The claimed method may provide a polymeric membrane composed of an amphiphilic block copolymer which retains its cross-sectional structure after a heat treatment at 180°C for 30 minutes, as determined by analyzing SEM images of the cross-section of a specimen of 1 cm x 1 cm in size of the polymeric membrane before and after heat treatment.

The claimed method may provide a polymeric membrane composed of an amphiphilic block copolymer which retains its cross-sectional structure after a chemical treatment in anisole for 15 minutes at a temperature of about 21°C and washing with ethanol, as determined by analyzing SEM images of the cross-section of a specimen of 1 cm x 1 cm in size of the polymeric membrane before and after chemical treatment.

In another embodiment, related to the above embodiments, the polymeric membrane is a porous membrane, such as an isoporous membrane. Preferably, the polymeric membrane is an integral asymmetric membrane. The polymeric membrane is a block-copolymer membrane containing vinlbenzocyclobutene units, such as a poly(4-vinylbenzocyclobutene)-b-poly(4-vinylpyridine) membrane.

### DEFINITIONS

In the context of the present invention the term "non-solvent liquid" shall designate liquids which do not dissolve the polymeric material and do not react with the polymeric material.

In the context of the present invention the term "isorefractive" shall designate materials having substantially the same refractive index. The refractive index (also known as refraction index or index of refraction) of a material is a dimensionless number that describes how fast light travels through the material.

The "refractive index" is measured using the method disclosed in R. Nussbaumer et al. "A simple method for the determination of refractive indices of (rough) transparent solids", Journal of Material Science 40 (2005), pages 575-582. Thus, the term *"isorefractive"* in the context of the present invention shall refer to combinations of cross-linkable polymeric material and non-solvent liquid, wherein the cross-linkable polymeric material is substantially transparent, preferably substantially invisible, once immersed into the non-solvent liquid.

In the context of the present invention the term "po*rous membrane"* or *"porous, polymeric membrane"* is meant to designate polymeric films having an upper and lower surface and a film thickness connecting the respective upper and lower surfaces, which films exhibit two-dimensional, i.e. single-layer arrays of pores on at least one film surface.

In *"integral asymmetric membranes",* the pores have a larger diameter inside the film with the top open at the film surface. The pores are termed macroporous or microporous, depending on their size, i.e. diameter. The term *"macroporous"* is meant to designate pores having a mean pore size as determined by electron microscopy in the range of from 50 nm to 10 µm, preferably from 1 µm to 2 µm. The term *"microporous"* is meant to designate pores having a mean pore size in the range of from 2 nm to less than 50 nm according to IUPAC (International Union of Pure and Applied Chemistry), K.S.W. Sing et al. "Reporting physisorption data for gas/solid systems with special reference to the determination of surface area and porosity", Pure Appl. Chem., 1985, 57, 603.

The term *"isoporous"* is meant to designate pores at the surface having a ratio of the maximum pore diameter to the minimum pore diameter of at most 3, preferably at most 2. The pore sizes and pore size distribution can e.g. be determined by image analysis of images of the membrane surface obtained by microscopy such as electron microscopy. Scanning electron microscopy was used to obtain images of the surfaces and cuts through of the membranes depicted herewith, and the size and the distribution of the pores on the surface of the film were determined by using an imaging analysis software

The term *"polymeric membrane", "porous membrane"* or *"membrane"* as used herein is meant to designate porous films where the pores are connected to extend throughout the entire thickness of the membrane.

The term *"volatile"* is meant to designate solvents which are able to evaporate (it has a measurable vapour pressure) at processing temperatures.

### BRIEF DESCRIPTION OF THE FIGURES

**Fig. 1** shows SEM images from an integral asymmetric membrane of a poly(4-vinylbenzocyclobutene)-block-poly(4-vinylpyridine) diblock copolymer (PVBCB₇₉P4VP₂₁^{108k}) produced and treated according to Example 1 of this disclosure.
**Fig. 2** shows a TEM cross-section after embedding the membrane of Example 1 in epoxy.
**Fig. 3** shows SEM images from the cross sections of an integral asymmetric membrane of PVBCB₇₉P4VP₂₁^{108k} produced and treated according to Example 2 of this disclosure.
**Fig. 4** shows SEM images from the cross sections of an integral asymmetric membrane of PVBCB₇₉P4VP₂₁^{86k} produced and treated according to Example 3 of this disclosure.
**Fig. 5** shows SEM images from the cross sections of an integral asymmetric membrane of PVBCB₇₉P4VP₂₁^{86k} produced and treated according to Example 4 of this disclosure.
**Fig. 6** shows SEM images from the surface of an integral asymmetric membrane of PVBCB₈₀P4VP₂₀^{97k} produced and treated to Example 5 of this disclosure.
**Fig. 7** shows SEM images from the surface of an integral asymmetric membrane of PVBCB₈₀P4VP₂₀^{97k} produced and treated according to Example 5 of this disclosure.

### DETAILED DESCRIPTION OF THE INVENTION

As stated, a method to determine whether the non-solvent liquid is isorefractive with the cross-linkable polymeric material, is based on the invisibility of a body immersed in a liquid with the same refractive index as that of the body. The refractive index of a solid can be estimated visually when a liquid of close refractive index is found which renders the immersed solid invisible or at least transparent. In that regard, the refractive index of many liquids is known and can be obtained from appropriate tables. The refractive index is conveniently determined at a wavelength of 589.29 nm and at 20°C. For example water, a non-solvent liquid for most of the amphiphilic block-copolymer membranes, has a refractive index of 1.333. The refractive index of a liquid may be manipulated by dissolving certain solutes in the liquid. A 10% glucose solution in water has a refractive index of 1.3477, a 20% glucose solution in water has a refractive index of 1.3635, and a 60% glucose solution in water has a refractive index of 1.4394. The refractive index of water may be also manipulated by dissolving salts as a solute, such as zinc bromide, in the water. Thus, to achieve that the non-solvent liquid is isorefractive with the cross-linkable polymeric material, it is possible to dissolve an inorganic salt, such as zinc bromide, in the liquid, such as water, until cross-linkable polymeric material immersed in the liquid turns transparent. It is within the knowledge of a skilled person to transfer this concept to other liquids, such as alcohol or silicone oil, and other solutes.

In case of a block-copolymer membrane, such as a poly(4-vinylbenzocyclobutene)-b-poly(4-vinylpyridine) membrane, water having dissolved therein a salt in appropriate amounts to achieve it being isorefractive with the membrane material is the preferred non-solvent liquid. Mixtures of non-solvent liquids are equally conceivable. Preferably the salt is zinc bromide.

The preferred wave length of the UV light for irradiation is between 250 and 300 nm. Irradiation preferably is conducted at ambient temperature, such as about 20°C.

Without wishing to be bound to any theory, it is assumed that when immersing the cross-linkable membrane material into a non-solvent liquid which is isorefractive with the membrane material, both the membrane material and the liquid have substantially same refractive indices resulting in a transparent polymeric material with the liquid. It is further assumed that due to the transparency the irradiation, such as UV irradiation, is not readily absorbed by the membrane material and that therefore the penetration depth of the irradiation is on the same length scale as the thickness of the polymeric material. Subsequent irradiation will cause photochemical reactions of photoactive moieties in the membrane material resulting in cross-linked membrane material over its entire thickness.

It will be readily appreciated that the cross-linking method presently proposed is not only limited to block copolymer membranes; it can be used as a method for cross-linking by irradiation any cross-linkable polymeric material. Therefore, the cross-linking method can be easily transferred to film materials, foams and coatings, and to any kind of porous, isoporous and dense membrane system, all with expectation of achieving cross-linking over the entire thickness (cross-section).

In the case of a dense membrane system, including for example homopolymers, block copolymers, particles or inorganic materials, with less than one micrometer in thickness, a complete cross-linking without the addition of any swelling agent is possible. For thicker dense membrane systems a swelling of the material is probably advantageous for achieving complete cross-linking. In this context, a non-solvent that is able to swell the material can be used for transparent films whereas an isorefractive non-solvent that is isorefractive to one or more domains is needed in the case of non-transparent films (e.g. semi crystalline, block copolymers based or fillers in the material).

In the presence of photoactive moieties, the cross-linking takes place by irradiating the polymeric material directly. If the cross-linkable polymeric material does not contain any photoactive moieties, the polymeric material nevertheless can be cross-linked by irradiation by adding photo initiators of Norrish-Type I and/or II and/or by adding multifunctional monomers.

The inventors propose a completely cross-linked block-copolymer integral asymmetric membrane with a highly ordered thin selective layer on top of a porous layer. Due to the polymer composition, the membrane can be cross-linked over the full thickness (cross-section) by UV irradiation in an isorefractive non-solvent liquid. Due to the proposed cross-linking process the block copolymer membranes become thermally and chemically stable. It has been found that the membranes produced according the proposed method can withstand harsh operation conditions in a wide temperature range of -20°C to 350°C, pressure differences of up to 150 bar and aggressive media such as organic, acidic or basic solvents. Therefore, the membranes developed in this invention are expected to show stable long-time performance in ultrafiltration processes also in the case of higher temperature and pressure.

Up to now in block copolymer membranes the membrane surface was the only selective layer while in this case the membrane performance is dependent from the porosity of the membrane body as well.

### EXAMPLES

The block copolymers used in the examples of the present invention are generally of the type poly(4-vinylbenzocyclobutene) -b-poly(4-vinylpyridine) (PVBCB-b-P4VP). In particular the sample nomenclature PVBCB₇₉P4VP₂₁^{108k} attributes PVBCB to poly (4-vinylbenzocyclobutene), P4VP as abbreviation for poly(4-vinylpyridine), subscripts the weight percentage of each block in the polymer and the number following is attributed to the total molecular weight in kg/mol.

Poly(4-vinylbenzocyclobutene)-b-poly(4-vinylpyridine) is known from WO 2021/023500 A1, which is incorporated herein for reference. It can be produced via the following route:

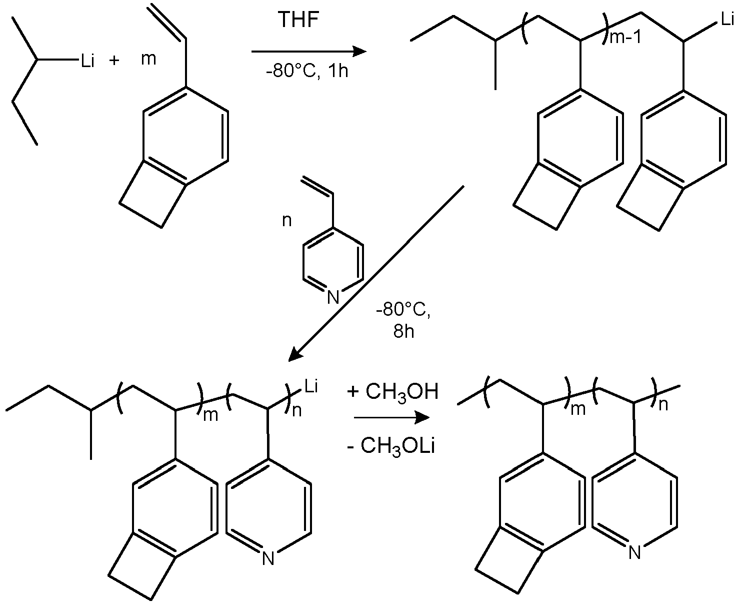

The synthesis of the block copolymers was achieved via anionic polymerization. All monomers and solvents were purified prior to reach the standards required for anionic polymerization. The polymerization procedure was conducted as follows: A 250 ml glass reactor was connected on the vacuum line, evacuated to attain high vacuum. Subsequently purified THF was distilled into the reactor and titrated under argon at -80 °C, by a small amount of sec-butyllithium (s-BuLi), until a vivid yellow color was observed. Upon the disappearance of the color the reactor was brought again at -80°C and the first purified monomer 4-vinylbenzocyclobutene (4-VBCB 2.213 g, 0.023 mol) was inserted via a syringe in the reactor, followed by the initiator s-BuLi (0.28 M in cyclohexane, 0.08 mL, 0.000 022 mol). The polymerization solution immediately developed a bright orange color indicating the formation of propagating anion of 4-VBCB and the reaction was left to complete for 1h at -80°C. After the reaction was completed, an aliquot was withdrawn and the second purified monomer 4-vinylpyridine (4-VP, 0.539g 0.0056 mol) was inserted in the polymerization reactor. At this point, the solution color changed rapidly to light yellow-green indicating the propagation of the 4VP block. The polymerization completed overnight and on the following day terminated with vacuum-degassed methanol (0.5 mL).

The diblock copolymer was recovered by precipitation in hexane and dried under vacuum at 50 °C for 48 h. The yield was 96% (2.75 g). The molecular characteristics of the diblock copolymer were derived from the measurements in SEC using as solvent chloroform and PS standards and ¹H-NMR in CDCl₃. The total molecular weight of the polymer is calculated 108 Kg/mol and PVBCB block is 79 wt.% and P4VP 21 wt.%.

For the preparation of the membrane casting solution and subsequent membrane casting, the block copolymer PVBCB₇₉P4VP₂₁^{108k} was dissolved in a mixture of dimethylformamide, dioxane and tetrahydrofurane to provide a viscous but clear solution. The casting solution was spread out using a home-made casting machine using a doctor blade with a gap height adjusted to 200 µm on a polyester nonwoven support. After 10 seconds, the film was immersed in a water bath. Drying of the membrane followed at 60°C under vacuum.

The membranes were then cross-linked using UV radiation. Specimen of the so-produced membranes of 1 cm x 1 cm in size were cut out and subjected to SEM analysis.

To further improve their properties, the membranes were soaked in an aqueous zinc bromide solution (c(ZnBr₂) = 4.4 g/mL having a refractive index of 1.58) for 10 hours. Afterwards the membrane was removed from the solution and the remaining droplets on top of the membrane were removed. The now transparent membrane was placed on a glass plate and irradiated with UV light. The wavelength of the UV light was varied in a range of 250-300 nm. Due to the UV activation of PVBCB and P4VP a wavelength of 290 nm showed the best cross-linking performance. Next to the wavelength also the distance of the lamp to the membrane, the irradiation time and the intensity were varied between 1 and 30 cm, 5 min and 24 hours and from 20 to 500 W. In addition, the membrane was UV cross-linked with the surface on top as well as the support on top. During the UV irradiation the membrane discoloured to yellow due to the successful cross-linking reaction of the BCB moieties. Afterwards, the membrane was soaked in water to remove the salt residues and dried 48 h at 60°C in vacuum.

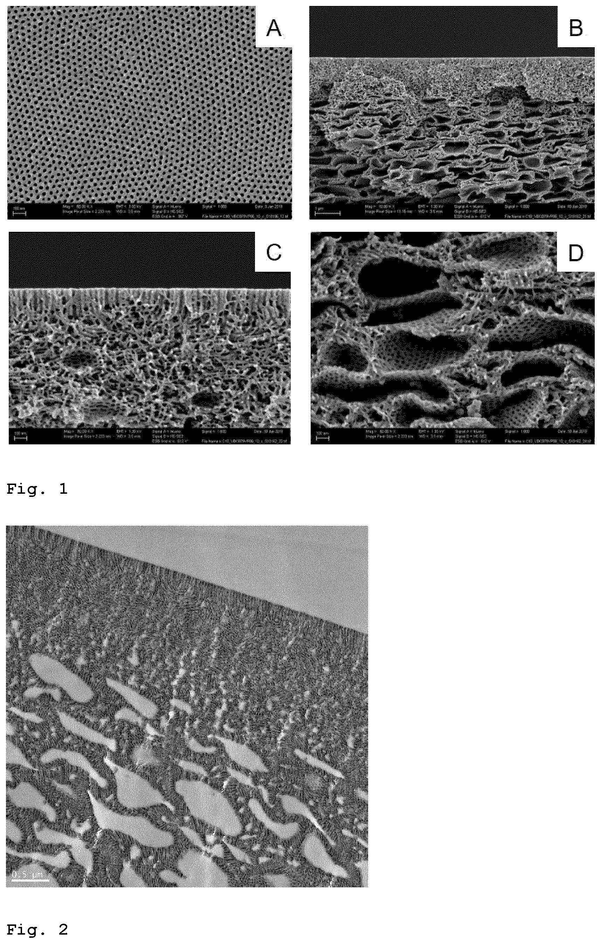

**Example 1:** Turning to **Fig. 1****,** a membrane was cast from a 20 wt% solution of PVBCB₇₉P4VP₂₁^{108k} in a solvent of the weight composition DMF/THF/Dioxane - 10/45/45 wt%. Image A depicts the porous selective upper layer of the integral asymmetric membrane. Image B depicts the cross section of the membrane at a lower magnification so the akin to a foaming structure cavities assembly can be observed. Image C depicts a close up to the upper part of the cross section where cylindrical pores proximately 150-200 nm long are observed. Image D depicts the porous structure of the walls of cavities of the membrane body. As can been seen in **Fig. 2****,** the upper side of the membrane is directed to the upper right corner of the picture. The membrane was stained with iodine; black areas indicate the P4VP domains whilst the light grey areas indicate the PVBCB domains.

As shown in **Fig. 1****,** Image **A**, surface hexagonal pores on the membrane of approximately 25 nm (± 3 nm) in size are found. As shown in the cross-sectional view of said membrane in **Fig. 1****,** Images **B** and **D,** cavities are found in the membrane body which have the same porosity as the membrane surface. Pure water flux experiments have revealed a relatively low but constant flux from these membranes. The pure water, although it is forced to pass through the porous walls of the cavities, finds more resistance, which leads to lower flux values. Up to now in block copolymer membranes the membrane surface was the only selective layer while in this case the membrane performance is dependent from the porosity of the membrane body as well. In **Fig. 1****,** Image **C,** the pores of the selective layer are cylindrical and approximately 150 to 200 nm long. The pores of the cavities appear to be 20 nm long.

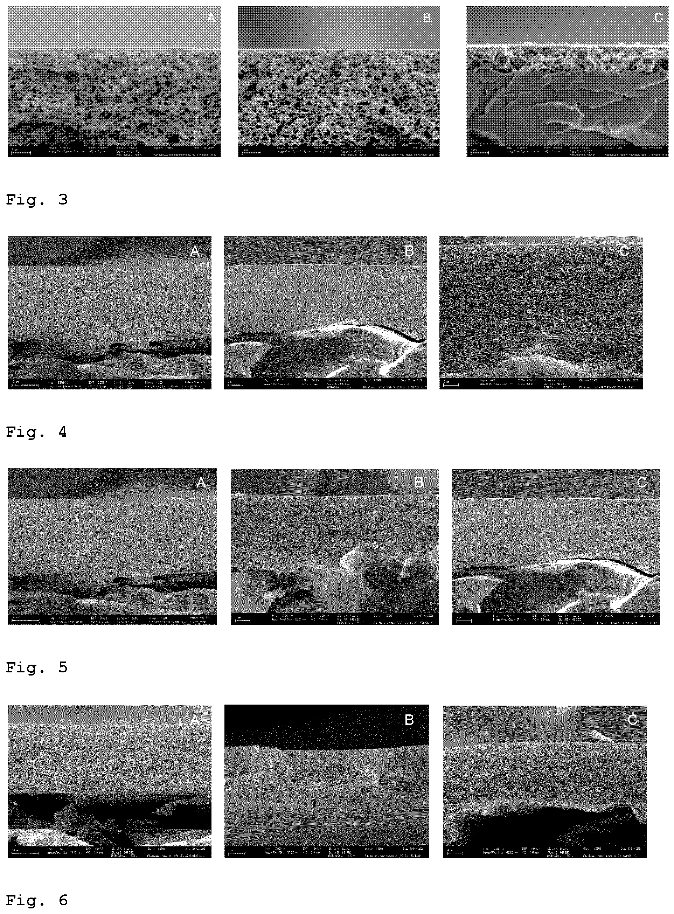

**Example 2:** Turning to **Fig. 3****,** a membrane was cast from a 19 wt% solution of PVBCB₇₉P4VP₂₁^{108k} in a solvent of weight composition DMF/THF/Dioxane - 10/45/45 wt%. Image **A** depicts the cross section of the integral asymmetric membrane. Image **B** depicts the cross section of the membrane after treatment with UV irradiation for 30 minutes. Image **C** depicts the cross section of the UV irradiated membrane after heating it at 180°C for 15 minutes.

It has been observed that the structure of the membrane remains undamaged to a depth of 1 µm. Probably due to the reflection of the UV irradiation inside the channels of the membrane, the cross-linking can take place to a depth of 1 µm from the membrane surface, at lower regions there seems not to be enough energy to trigger cross-linking. After heat treatment of the membrane at 180°C for 15 minutes, **Fig. 3****,** Image **C,** shows that the porous structure of the membrane in regions below 1 µm is completely destroyed showing that such membranes are not heat-resistant at such operating temperatures.

**Example 3:** Turning to **Fig. 4****,** a membrane was cast from a 20 wt% solution of PVBCB₇₉P4VP₂₁^{86k} in a solvent with the weight composition DMF/THF/Dioxane - 10/45/45 wt%. Image **A** depicts the cross section of the integral asymmetric membrane. Image **B** depicts the cross section of the pristine membrane after heating at 180°C for 30 minutes showing that the porous structure of the membrane is completely destroyed, and that such membranes are not heat-resistant at such operating temperatures. Image **C** depicts the cross section of the UV irradiated membrane (4 h with support on top and 15 minutes with surface on top) after heating at 180°C for 30 minutes. **Fig. 4****,** Image **C,** shows that the porous structure of the membrane is maintained throughout its entire thickness (cross-section) showing that such membranes are heat-resistant at such operating temperatures.

**Example 4:** Turning to **Fig. 5****,** a membrane was cast from a 20 wt% solution of PVBCB₇₉P4VP₂₁^{86k} in a solvent with the weight composition DMF/THF/Dioxane - 10/45/45 wt%. Image **A** depicts the cross section of the integral asymmetric membrane. Image **B** depicts the cross section of the pristine membrane after heating at 180°C for 30 minutes showing that the porous structure of the membrane is completely destroyed, and that such membranes are not heat-resistant at such operating temperatures. Image **C** depicts the cross section of the UV irradiated membrane (1 h) after heating at 180°C for 30 minutes. As shown in image **C,** the structure of the membrane was retained proving the complete cross-linking over the entire thickness (cross-section).

**Example 5:** Turning to **Fig. 6****,** a membrane was cast from a 22 wt% solution of PVBCB₈₀P4VP₂₀^{97k} in a solvent of the weight composition DMF/THF/Dioxane - 10/45/45 wt%. Image **A** depicts the surface of the integral asymmetric membrane. Image **B** depicts the surface of the pristine membrane after soaking 15 minutes in anisole. Image **C** depicts the surface of the UV irradiated membrane (1 h) after soaking 15 minutes in anisole. As shown in image **C,** the structure of the membrane was retained proving the complete cross-linking over its entire thickness (cross-section). The structure of the non cross-linked membrane was completely destroyed after soaking in anisole (image **B).**

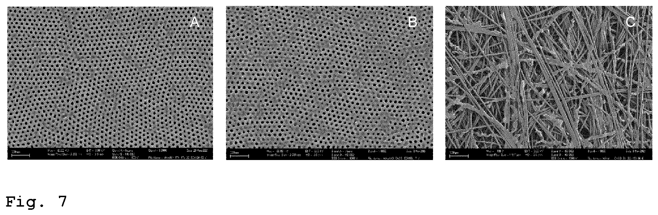

**Example 6:** Turning to **Fig. 7****,** a membrane was cast from a 22 wt% solution of PVBCB₈₀P4VP₂₀^{97k} with a solvent weight composition DMF/THF/Dioxane - 10/45/45 wt%. Image **A** depicts the surface of the integral asymmetric membrane. Image **C** depicts the surface of the pristine membrane after soaking 15 minutes in chloroform. Image **B** depicts the surface of the UV irradiated membrane (1 h) after soaking 15 minutes in chloroform. As shown in image **B,** the surface structure of the membrane was retained while the non cross-linked membrane was completely dissolved and only the support fleece was visible (image **C).**

## Claims

1. A method for cross-linking a porous, polymeric membrane comprising the steps of providing a cross-linkable polymeric membrane,
immersing the cross-linkable membrane into a non-solvent liquid,
removing the membrane from the non-solvent liquid,
and subjecting the soaked cross-linkable polymeric membrane to radiation to cause cross-linking of the polymeric membrane,
wherein the non-solvent liquid is isorefractive with the cross-linkable polymeric membrane as determined visually when the non-solvent liquid renders the immersed cross-linkable polymeric membrane invisible, according to the method disclosed herein,
wherein the polymeric membrane is a block-copolymer membrane containing vinylbenzocyclobutene units and wherein the non-solvent liquid is water comprising a salt dissolved therein.

2. The method of claim 1, wherein the block-copolymer membrane is a poly(4-vinylbenzocyclobutene) -b-poly(4-vinylpyridine) (PVBCB-b-P4VP) membrane.

3. The method of claim 1 or 2, wherein the salt is zinc bromide.

4. The method of any one of claims 1 to 3, which is applied subsequent to a method of producing a polymeric membrane via block copolymer self-assembly and non-solvent induced phase separation (SNIPS) method.

5. A method for producing the porous, polymeric membrane according to claim 1 wherein the step of providing the cross-linkable polymeric membrane comprises the steps of dissolving at least one amphiphilic block copolymer in a solvent or mixture of solvents to form a casting solution of the block copolymer, applying the solution as a layer on a support with a doctor blade at a predefined thickness, and contacting the solution layer with non-solvent to induce phase separation and thereby producing an integral asymmetric polymeric membrane, wherein the amphiphilic block copolymer is a diblock copolymer containing vinylbenzocyclobutene units and wherein the non-solvent liquid is water comprising a salt dissolved therein.

6. The method of claim 5, wherein the amphiphilic block copolymer is a poly(4-vinylbenzocyclobutente)-block-poly(4-vinylpyridine) diblock copolymer.

7. The method of claims 5 or 6, wherein the salt is zinc bromide.

8. The method of any of claims 5 to 7, wherein the casting solution is extruded through a rectangular die onto a substrate to produce a polymeric membrane in flat sheet geometry.

## Patentansprüche

1. Verfahren zum Vernetzen einer porösen Polymermembran, bei dem in Schritten: eine vernetzbare Polymermembran bereitgestellt wird, die vernetzbare Membran in eine Non-Solvent-Flüssigkeit getaucht wird, die Membran aus der Non-Solvent-Flüssigkeit entfernt wird, und die getränkte vernetzbare Polymermembran einer Strahlung unterworfen wird, um eine Vernetzung der Polymermembran zu bewirken,
wobei die Non-Solvent-Flüssigkeit mit der vernetzbaren Polymermembran isorefraktiv ist, wie visuell festgestellt, wenn die Non-Solvent-Flüssigkeit die eingetauchte vernetzbare Polymermembran unsichtbar macht, gemäß dem hier offenbarten Verfahren,
wobei die Polymermembran eine Blockcopolymermembran ist, die Vinylbenzocyclobuteneinheiten enthält, und wobei die Non-Solvent-Flüssigkeit Wasser ist, das ein darin gelöstes Salz enthält.

2. Verfahren nach Anspruch 1, wobei die Blockcopolymermembran eine Poly(4-vinylbenzocyclobuten)-b-poly(4-vinylpyridin) (PVBCB-b-P4VP)-Membran ist.

3. Verfahren nach Anspruch 1 oder 2, wobei das Salz Zinkbromid ist.

4. Verfahren nach einem der Ansprüche 1 bis 3, das nach einem Verfahren zur Herstellung einer Polymermembran durch Selbstorganisation von Blockcopolymeren und durch Non-Solvent-induzierte Phasentrennung (SNIPS-Verfahren) angewendet wird.

5. Verfahren zur Herstellung der porösen Polymermembran nach Anspruch 1, wobei bei dem Schritt des Bereitstellens der vernetzbaren Polymermembran weiterhin: mindestens ein amphiphiles Blockcopolymer in einem Lösungsmittel oder einem Lösungsmittelgemisch gelöst wird, um eine Gießlösung des Blockcopolymers zu bilden, die Lösung als Schicht auf einen Träger mit einem Rakel in einer vordefinierten Dicke aufgebracht wird, und die Lösungsschicht mit einem Non-Solvent kontaktiert wird, um eine Phasentrennung zu induzieren und dadurch eine integrale asymmetrische Polymermembran herzustellen, wobei das amphiphile Blockcopolymer ein Diblockcopolymer ist, das Vinylbenzocyclobuteneinheiten enthält, und wobei die Non-Solvent-Flüssigkeit Wasser ist, das ein darin gelöstes Salz enthält.

6. Verfahren nach Anspruch 5, wobei das amphiphile Blockcopolymer ein Poly(4-vinylbenzocyclobutente)-block-poly(4-vinylpyridin)-Diblockcopolymer ist.

7. Verfahren nach Anspruch 5 oder 6, wobei das Salz Zinkbromid ist.

8. Verfahren nach einem der Ansprüche 5 bis 7, wobei die Gießlösung durch eine rechteckige Düse auf ein Substrat extrudiert wird, um eine Polymermembran in flacher Blattgeometrie herzustellen.

## Revendications

1. Procédé de réticulation d'une membrane polymère poreuse, comprenant les étapes consistant à fournir une membrane polymère réticulable,
immerger la membrane réticulable dans un liquide non-solvant,
retirer la membrane à partir du liquide non solvant, et
soumettre la membrane polymère réticulable trempée à un rayonnement pour provoquer une réticulation de la membrane polymère,
dans lequel le liquide non-solvant est isoréfractif avec la membrane polymère réticulable, comme déterminé visuellement lorsque le liquide non-solvant rend la membrane polymère réticulable immergée invisible, selon le procédé divulgué ici,
dans lequel la membrane polymère est une membrane de copolymère séquencé contenant des unités de vinylbenzocyclobutène et dans lequel le liquide non-solvant est de l'eau comprenant un sel dissous dans celle-ci.

2. Procédé selon la revendication 1, dans lequel la membrane de copolymère séquencé est une membrane de poly(4-vinylbenzocyclobutène)-b-poly(4-vinylpyridine) (*PVBCB-b-*P4VP).

3. Procédé selon la revendication 1 ou 2, dans laquelle le sel est du bromure de zinc.

4. Procédé selon l'une quelconque des revendications 1 à 3, qui est appliqué à la suite d'un procédé de production d'une membrane polymère par un procédé d'auto-assemblage de copolymère séquencé et de séparation de phase induite par un non-solvant (SNIPS).

5. Procédé de production de la membrane polymère poreuse selon la revendication 1, dans lequel l'étape consistant à fournir la membrane polymère réticulable comprend les étapes consistant à dissoudre au moins un copolymère séquencé amphiphile dans un solvant ou un mélange de solvants pour former une solution de coulée du copolymère séquencé, appliquer la solution sous la forme d'une couche sur un support avec une racle à une épaisseur prédéfinie, et mettre en contact la couche de solution avec un non-solvant pour induire une séparation de phase et produire ainsi une membrane polymère asymétrique intégrale, dans lequel le copolymère séquencé amphiphile est un copolymère dibloc contenant des unités de vinylbenzocyclobutène et dans lequel le liquide non-solvant est de l'eau comprenant un sel dissous dans celle-ci.

6. Procédé selon la revendication 5, dans lequel le copolymère séquencé amphiphile est un copolymère dibloc de poly(4-vinylbenzocyclobutente)-bloc-poly(4-vinylpyridine).

7. Procédé selon la revendication 5 ou 6, dans lequel le sel est du bromure de zinc.

8. Procédé selon l'une quelconque des revendications 5 à 7, dans lequel la solution de coulée est extrudée à travers une filière rectangulaire jusque sur un substrat pour produire une membrane polymère dans une géométrie de feuille plate.
